# EUROPEAN PATENT APPLICATION

(11) **EP 1 598 837 A1**
(43) Date of publication of application: **23.11.2005**
(21) Application number: 04076487.0
(22) Date of filing: 21.05.2004
(51) Int. Cl.: H01F 7/02, H01F 41/02, H01F 1/147

(54) **A component having various magnetic characteristics and qualities and method of making**

(71) Applicant: Delphi Technologies, Inc., Troy, MI 48007 (US)
(72) Inventor: Gay, David Earl, Pendleton, IN 46064 (US)
(74) Representative: Denton, Michael John

(57) **Abstract**

A magnetic armature (10), having an outer ring (12) formed of a first powdered metal, the outer ring having magnetic qualities and the first powdered metal of the outer ring includes metals having poor welding characteristics; an inner ring (14) formed of a second powdered metal and being disposed within the outer ring, the inner ring being an iron metal having good welding characteristics and the inner ring defines an inner opening (16) for receiving a shaft (18) for rotating the magnetic armature; wherein said outer ring and said inner ring are joined together by a sintering process and the shaft is welded to the inner ring.

## Description

### TECHNICAL FIELD

This disclosure relates to forming items of materials having different properties wherein the desirable properties of the different materials are utilized in different manners while the undesirable qualities of the materials are minimized or nullified.

### BACKGROUND OF THE INVENTION

Rotating shafts which are driven by operable machinery provide a means for providing specific data which is related to the rotating shaft or member secured thereto. Sensors to measure the torque imposed on rotating shafts, such as but not limited to shafts in vehicles, are used in many applications. For example, it might be desirable to measure the torque on rotating shafts in a vehicle's transmission, or in a vehicle's engine (e.g., the crankshaft), or in a vehicle's automatic braking system (ABS) for a variety of purposes known in the art.

The use of powder metallurgy (P/M), and particularly iron and iron alloy powders, is known for forming magnets, including soft magnetic cores for transformers, inductors, AC and DC motors, generators, and relays. An advantage to using powdered metals is that forming operations, such as compression molding, injection molding and sintering techniques, can be used to form intricate molded part configurations, such as magnetic cores, without the need to perform additional machining and piercing operations. As a result, the formed part is often substantially ready for use immediately after the forming operation.

However, the securement of the magnetic material to the rotating member provides unique obstacles, as the soft magnetic material is not very suitable for welding processes wherein a strong bond is formed between the rotating shaft and the magnetic material being rotated.

Soft magnets can be sintered at temperatures of about 2050 degrees Fahrenheit (about 1120 degrees Celsius) or more to achieve greater mechanical strength. However, and as enumerated in U.S. Patent No. 6,423,264, the contents of which are incorporated herein by reference thereto, such high temperatures affect the magnetic properties of hard or permanent magnetic components. U.S. Patent No. 6,224,798, the contents which are incorporated herein by reference thereto, is also related to a method for fabricating powdered metal cores. The present disclosure relates to a metallurgy process wherein available that enabled the mass production of rotating electromagnetic components having both a soft outer ring and an inner iron ring for welding to an iron insert or shaft is facilitated.

### SUMMARY OF THE INVENTION

A magnetic armature, having an outer ring formed of a first powdered metal, the outer ring having magnetic qualities and the first powdered metal of the outer ring includes metals having poor welding characteristics; an inner ring formed of a second powdered metal and being disposed within the outer ring, the inner ring being an iron metal having good welding characteristics and the inner ring defines an inner opening for receiving a shaft for rotating the magnetic armature; wherein said outer ring and said inner ring are joined together by a sintering process and the shaft is welded to the inner ring.

A method of manufacturing an item having magnetic qualities, comprising: forming an outer ring of a first powdered metal, the outer ring having magnetic qualities and the first powdered metal of the outer ring comprising metals having poor welding characteristics; forming an inner ring of a second powdered metal, said inner ring being configured to be disposed within said outer ring, said inner ring comprising a pure iron metal having good welding characteristics and said inner ring defining an inner opening configured for receiving a shaft for rotating the item; wherein said outer ring and said inner ring are joined together by a sintering process.

A method of manufacturing an item having magnetic qualities, comprising: forming an outer ring of a first powdered metal, the outer ring having magnetic qualities and the first powdered metal of the outer ring comprising metals having poor welding characteristics; forming an inner ring of a second powdered metal, said inner ring being configured to be disposed within said outer ring, said inner ring comprising a pure iron metal having good welding characteristics and said inner ring defining an inner opening configured for receiving a shaft for rotating the item; wherein said outer ring and said inner ring are joined together by a sintering process comprising: defining a first cavity in a die, said first cavity corresponding to the outer ring; filling the first cavity with the first powdered metal; defining a second cavity in the die, the second cavity corresponding to the inner ring; filling the second cavity with the second powdered metal; and compacting the first and second powdered metals; and heating the first powdered metal and the second powdered metal in excess of 2000 degrees Fahrenheit.

### DESCRIPTION OF THE FIGURES

Figure 1 is a top plan view of a magnetic armature formed using the process of the present disclosure;
Figure 2 is a view along lines 2-2 of Figure 1;
Figure 3 is a top plan view of a magnetic armature;
Figure 4 is a view along lines 4-4 of Figure 3;
Figure 5 is a view along lines 5-5 of Figure 3;
Figure 6 is a cross sectional view of a magnetic armature formed using the process of the present disclosure;
Figure 7 is a side elevational view of a shaft for use with a magnetic armature formed using the process of the present disclosure;
Figure 8 is a cross sectional view of a magnetic armature and shaft formed using the process of the present disclosure;
Figure 9 is an enlarged portion of Figure 8; and
Figures 10-15 are views illustrating an embodiment of the present disclosure.

### DETAILED DESCRIPTION

The present disclosure is directed to an item and method manufacture wherein at least two discrete materials having different characteristics and qualities are used to produce an item wherein the two discrete materials have characteristics unique to a particular purpose or application each of which is required by the item. The particular item and configuration described below and in the figures provides an example of an item being manufactured by the method of the present disclosure and the present disclosure is not intended to be limited to the particular items and configurations listed below and shown in the attached figures.

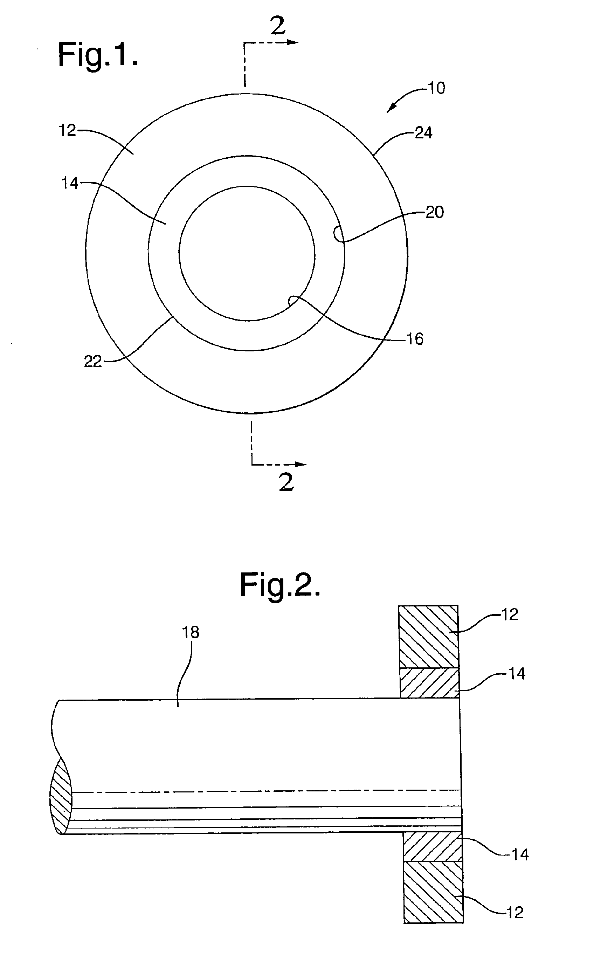

Referring now to the Figures and in particular Figure 1, an armature 10 constructed in accordance with the present disclosure is illustrated. Armature 10 is a magnetic armature requiring a soft magnetic outer ring for use in a particular application while the center portion of the armature is secured to the shaft that provides a rotational force to armature 10. Armature 10 comprises an outer ring 12, an inner ring 14 and a central opening 16. Central opening 16 is configured to receive a shaft 18, which is fixedly secured in opening 16 by a welding process. The shaft is secured to a device at the other end for rotating the shaft and the armature.

In the course of manufacturing armature 10, the materials of the outer ring and the inner ring are fused to form a unitary structure, with the outer ring being effectively bonded to the inner ring. In addition, the shaft may be installed sufficiently early in the manufacturing process so that the inner ring is firmly secured to the shaft by the same operation that fuses the materials of the inner and outer rings. Alternatively, the shaft may be press fit into the central opening formed in the inner ring.

As discussed above it is desirable to have an item or armature that comprises a first material having the desired magnetic qualities and a second item having characteristics that are not found in the desired qualities of the first material but are desirable for other performance reasons, such as strength, weldability and lack of a susceptibility to fatigue etc.

An example of the first material is a Silicon Iron (Si-Fe) material. Si-Fe is a material that has good magnetic qualities but does not weld well (e.g., securement to other objects) as the Silicon acts like an impurity that adversely affects the welding process. In addition, Si-Fe is not as strong as other materials and is more prone to cracks, fatigue problems and/or strength issues.

An example of the second material is pure iron material. The iron is less susceptible to cracks, fatigue problems and/or strength issues and provides a good material to weld to. Thus, outer ring 12 comprises a material having the required magnetic qualities and inner ring 14 comprises a material having the required strength and weldability. Therefore, inner ring 14 will provide opening 16 into which shaft 18 is secured.

In an exemplary embodiment, outer ring 12 is formed out of a powdered metal that is filled into a mold, compressed and sintered. The powdered metal is prepared in accordance with known methods and technologies, which would be known to those skilled in the related arts. The prepared powder metal is then placed or filled into a die or mold wherein it is compacted or formed into a green compact. The forming process can be either cold forming or pressing or hot forming or pressing wherein any one of the following methods may be used: die pressing, rubber mold pressing, extrusion molding, slip casting, injection molding. It is noted that the present disclosure is not limited to the mentioned methods, which are provided as examples and are not intended to limit the present disclosure. The formed item is then sintered in accordance with known sintering techniques.

Inner ring 14 is also formed out of a powdered metal that is filled into a mold, compressed and sintered. Both inner ring 14 and outer ring 12 are filled and pressed into a mold wherein an inner surface portion 20 of outer ring 14 and an outer surface portion 22 of inner ring 12 are in contact with each such that during the sintering process inner ring 12 and outer ring 14 are bonded or secured together. Accordingly, outer ring 12 is sintered to inner ring 14.

In this embodiment the two different powder metal materials are double filled and single pressed in accordance with known technologies for forming items out of powdered metal. Of course, the powder metal materials may be filled and pressed more or less than described above. As discussed above, the inner powder would be a good welding material like pure iron powder and the outer powder would be a good magnetic material like Si-Fe or Ni-Fe and the two metals are sintered together. Also, the formed item would have a high spin strength suitable for use in a rotary device capable of spinning the item at high revolutions per minute, wherein the high magnetic performance and weld strength would be at least two features desired in the final product. Thus, and in one embodiment, the present disclosure provides a means for manufacturing, forming or producing an item (e.g., armature) having high magnetic performance, high spin strength wherein a Si-Fe material is used and the item (e.g., armature) is welded to a shaft. Accordingly, the un-desirable qualities of an armature of wrought Si-Fe stock material being welded to a steel shaft is overcome by a low cost alternative. In one embodiment the two different powder metal materials form a compacted component or green compact as is known in the art and then the two metals would be sintered together and yield good strength. The sintering process is typically 200 to 300 degrees Fahrenheit hotter than a typical welding process thus the sintering provides a greater bond between the two metals and since the outer ring is a "soft" magnetic material the higher temperature does not adversely affect the magnetic qualities of the outer ring. For example, during a sintering process uniform temperatures are attainable for longer periods of time. Also, there is the ability to control the atmosphere in which the sintering process is performed in order to provide a more desirable atmosphere for the sintering process (e.g.. reducing atmosphere and oxides). Also, the sintering process improves the magnetic qualities of the sintered material by controlling the temperature and atmosphere. Of course, the time and temperature of the sintering process may vary in accordance with the materials used and the temperatures provided herein are to be used as examples and are not intended to be limiting.

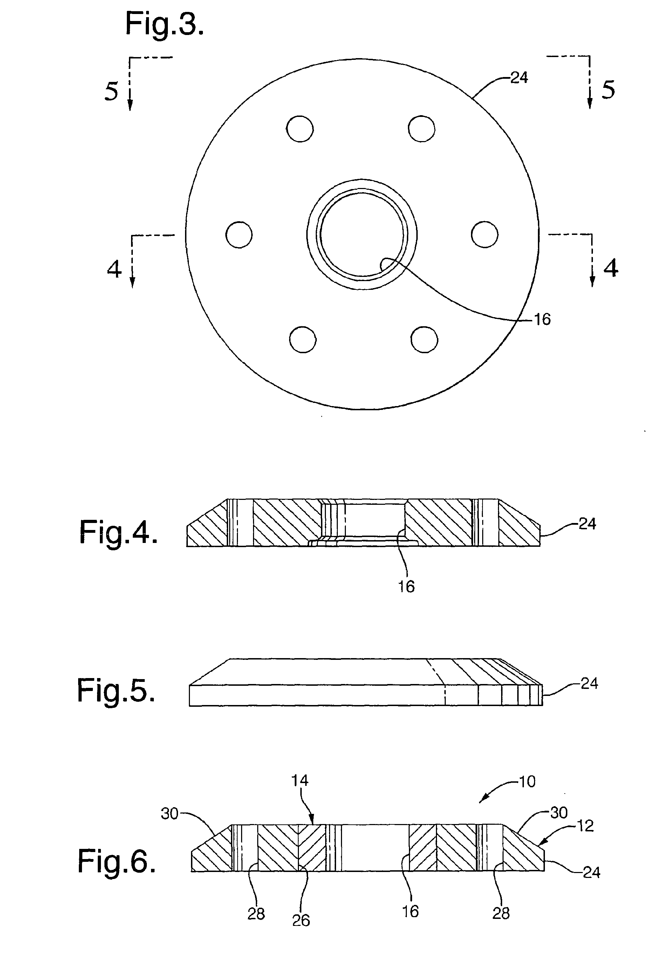

Once the sintering process is complete the inner ring or opening 16 is disposed about shaft 18 and the shaft is welded to the inner ring, as the inner ring comprises a good welding material while the outer ring comprises the magnetic material required for a particular application such as magnetic armature. For example, Figures 3-5 illustrate an armature wherein an inner opening 16 is provided to provide a means for receiving a shaft member for rotating the armature. In one contemplated use it would be desirable to have a magnetic outer periphery 24 of the armature illustrated in Figures 3-5. As discussed above the outer periphery can comprise a Ni-Fe or Si-Fe material which has the desirable magnetic qualities.

Referring now to Figure 6, a cross sectional view of an armature formed using the process of the present disclosure is illustrated. Here the outer ring is a Ni-Fe or Si-Fe material or equivalent that has the desired magnetic qualities and the inner ring comprises a material that has the desired weldability qualities. Moreover, the iron to Ni-Fe or Si-Fe interface 26 is provided by the sintering process therefore a strong bond is made between the two materials. In addition, the mold used in the powder metal process provides opening 16 wherein the pure iron material of inner ring 14 can be welded to an iron shaft to provide the desired mechanical strength between the two materials. Moreover, the use of powdered metals allows the materials to be formed in a mold wherein additional features such as openings 28 and/or tapers 30 are provided by the powdered metal being pressed into the mold. Also, opening 16 is configurable to have desired features illustrated in Figure 4 or no features (Figure 6), which depend of course on the shape of the die or mold being used during the compaction, pre-sintering and sintering process.

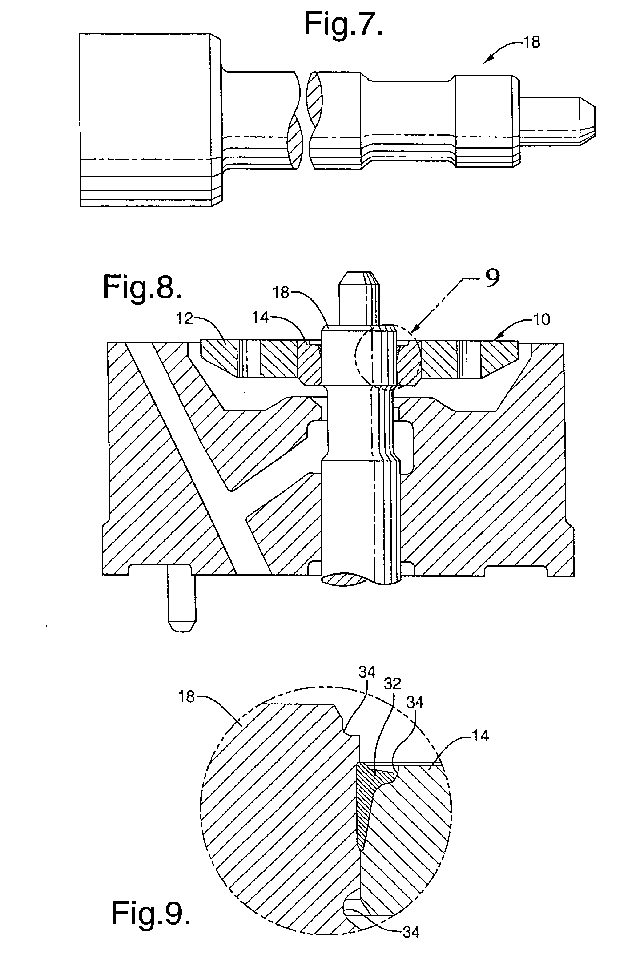

Figure 7 illustrates a shaft contemplated for use with the armature illustrated in the Figure 6. As discussed herein shaft 18 also comprises an iron material having good strength and weldability wherein shaft 18 is welded to the inner surface of opening 16 in inner ring 14. Figure 8 is a cross sectional view of the armature of Figure 6 secured to a shaft and disposed within its preferred location wherein the outer periphery of the magnetic armature is rotated proximate to a sensor or means for providing a magnetic field wherein the rotation of armature 10 and its outer ring of magnetic material provides signals in accordance with a desired use. For example, armature 10 can be used in vehicular applications. Of course, the method of making the armature is not intended to be limited to only these types of applications.

Figure 9 is an enlarged view of an enlarged portion of Figure 8 and illustrates the weld 32 between inner ring 14 and shaft 18. Also, illustrated in Figure 8 are features 34 which are formed on the surface of opening 16 and shaft 18. Features 34 are configured to assist in the insertion of shaft 18 with opening 16 and can also provide areas to receive weld 32. Alternatively, the surface of shaft 18 and opening 16 are provided with a continuous surface. An example of the type of weld is a laser weld or a tungsten inert gas (TIG) weld or equivalents thereof.

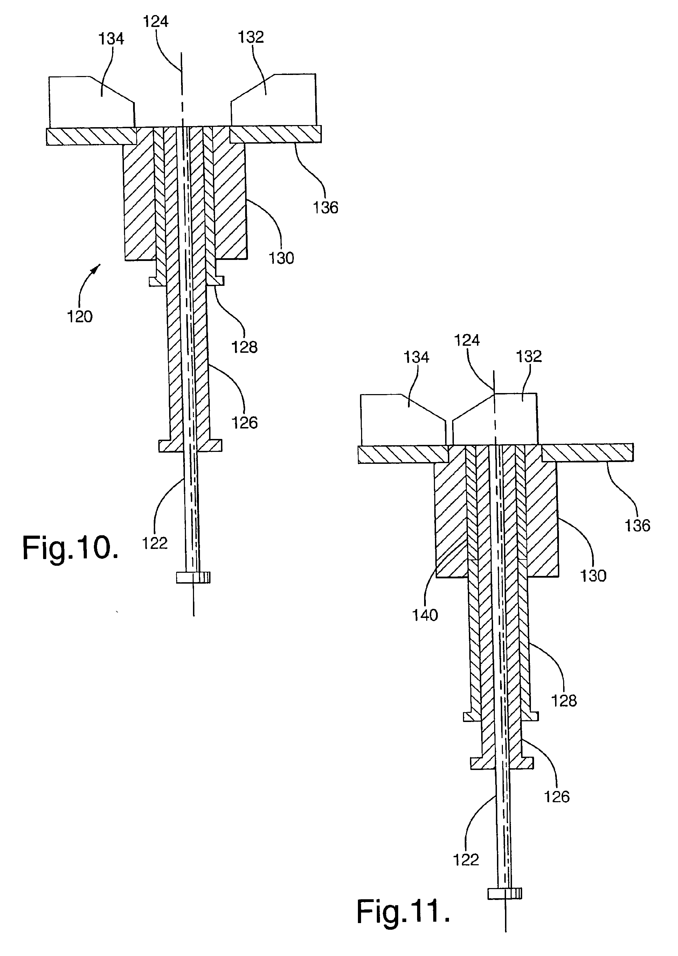

Figures 10 *-* 15 represent the embodiment of the disclosure in which both the inner ring 14 and the outer ring 12 are formed of powder metals. Suitable materials for outer ring 12 are "soft" magnet materials such as iron-nickel alloys, cobalt and its alloys, iron-silicon alloys, iron-phosphorus alloys, iron-silicon-aluminum alloys, ferrites and magnetic stainless steel alloys and equivalents thereof. Suitable materials for the inner ring include pure iron and equivalents thereof.

A suitable average particle size range for the powders is about 5 to about 1000 micrometers, with a preferred average size being about 100 to 200 micrometers. Of course, the particle size can be larger or smaller than the aforementioned values. To facilitate processing and maximize density after compaction, the individual particles of the inner and outer powders are blended in with a lubricant that volatizes or bums off during the sintering process. In one example the lubricant is approximately one percent of the materials being sintered. Of course, the lubricant can be used in percentages that are greater or less than the aforementioned values.

As an alternative the inner and outer powders are encapsulated with a polymeric coating material that bums off cleanly during the sintering operation of this disclosure. Suitable coating materials for this purpose include poly(alkylene carbonates), polypropylene oxide (PPO) polymer systems such as NORYL® from General Electric, waxes, low melting polymers, nylons, polyetherimides such as ULTEM® from General Electric, epoxies, phenolics, polyesters and silicones. These coating materials are preferably deposited on the powder particles to form a substantially uniform encapsulating layer, which may constitute about 0.1 to about 1 weight percent of each particle, preferably about 0.20 to about 0.50 weight percent of each particle. To further promote densities and eliminate the requirement for external die wall spray lubricants, the powders can be admixed with lubricants such as stearates, fluorocarbons, waxes, low-melting polymers and synthetic waxes such as ACRAWAX available from Lonza, Inc. Suitable methods for encapsulating the powders are well known, and include solution blending, wet blending and mechanical mixing techniques, and Wurster-type batch coating processes such as those described in U.S. Pat. Nos. 2,648,609 and 3,253,944. During the sintering process of this disclosure, the polymeric coatings and any lubricants burn off, leaving only the fused magnet particles. Of course, the percentages of the materials mentioned above may vary in accordance with desired applications.

As represented in Figures 10 - 15, a suitable manufacturing process for an item manufactured in accordance with the teachings of the present disclosure is based on an apparatus and method disclosed in U.S. Patent No. 5,221,503 to Ward et al, the contents of which are incorporated herein by reference thereto. As illustrated, a punch and die apparatus 120 is shown to have a central core rod 122 aligned along a longitudinal axis 124 of a heated die casing 130, which can be used to pre-heat and pre-sinter the materials prior to a more traditional sintering process. The apparatus 120 is configured to produce an armature (e.g., Figure 6) or other item requiring the materials of different qualities. Alternatively, the die casing does not have to be heated and is used only for compacting prior to sintering in an oven or equivalent structure. An annular inner punch 126 is slidably disposed about the core rod 122 while an annular outer punch 128 is slidably disposed between the inner punch element 126 and the heated die casing 130. A pair of powder dispensers 132 and 134 are provided on a die table 136 that is located at an upper end of the die casing 130. The powder dispensers 132 and 134 are loaded with the inner and outer ring powders, respectively, required for the outer ring 12 and inner ring 14. Each dispenser 132 and 134 is adapted to dispense its powder into one of the cavities formed when the inner and outer punches 126 and 128 are retracted, as will be more fully explained below. The die casing 130 and any other component of the apparatus 120 may be vibrated to enhance the filling of the cavities.

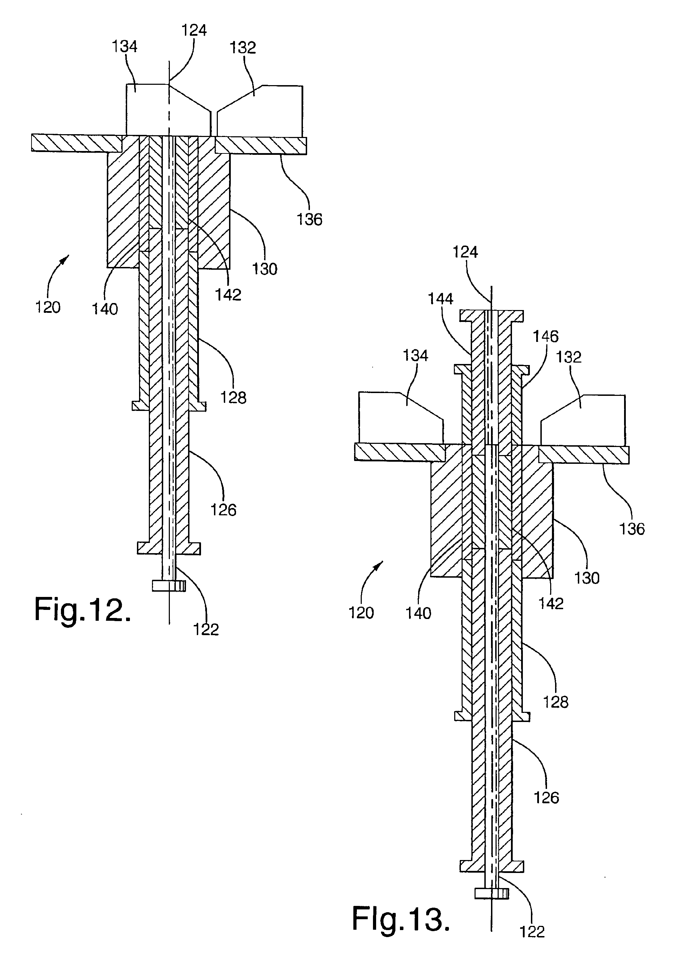

The inner and outer punches 126 and 128 are initially cycled to their uppermost positions to expel any foreign matter from the die casing 130. The outer punch 128 is then retracted, as shown in Figure 11, to form an outer ring cavity 140 between the heated die casing 130 and the outer diameter of the inner punch 126. The dispenser 132 is then moved from its base position to the cavity 140, and thereafter fills the cavity 140 with the powder (Ni-Fe or Si-Fe), as indicated in Figure 11. The dispenser 132 then returned to its base position, and the second dispenser 134 is positioned above the punches 126 and 128. The inner punch 126 is then retracted, as seen in Figure 12, to form an inner ring cavity 142, which is immediately backfilled with the pure iron powder from the dispenser 134.

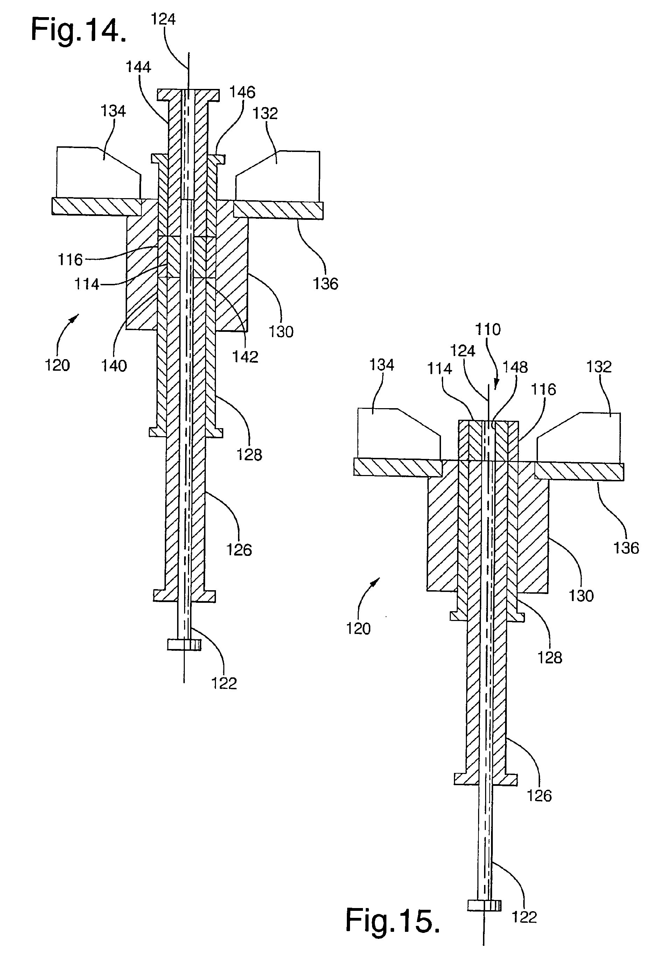

The inner ring cavity 142 may be shorter than the outer ring cavity 140 due to differences in the apparent densities of the powders used for the inner and outer rings. After filling the inner ring cavity 142, the dispenser 134 is returned to its base position as shown in Figure 13, and the inner punch 126 is further retracted to axially center the inner ring cavity 142 within the outer ring cavity 140. At the same time, a pair of upper punches 144 and 146 are positioned to axially oppose the punches 126 and 128 in preparation for compaction of the powders. As depicted in Figure 14, compaction of the powders is performed by forcing the punches 126 and 128 and opposing punches 144 and 146 toward each other.

As an alternative, the die casing 130 is pre-heated to a suitable temperature wherein the polymeric coating materials of the compacted powders begin to fuse, forming a bond between the inner ring and outer ring and the powders comprising thereof. As shown in Figure 15, upper punches 144 and 146 can be raised after the compaction step, and the inner and outer punches are raised to eject the green preformed item out of the punch and die apparatus prior to its inclusion into a furnace for sintering. In this embodiment the desired temperatures of the heated die casing depends on the glass transition temperature of the polymers used.

In the illustrated embodiment, the core rod defines central opening 16, and the manufacture of the item is completed with the insertion of the shaft through the opening to yield the armature of Figure 6. Alternatively, and prior to the compacting step, the core rod could be lowered to define another cavity corresponding to the opening, and then the shaft inserted in the third cavity so that the powder material is compacted around the shaft.

While the compaction process illustrated in Figures 10-15 was described in a particular sequence, those skilled in the art will appreciate that the order of filling is not critical.

Once the inner ring and outer ring are formed, the assembly (with or without the shaft) undergoes the sintering operation. Suitable temperatures for the sintering operation are higher than the temperature at which the magnetic properties of permanent magnet material degrades as the present disclosure is related to an outer ring of a "soft magnetic material". For example the sintering process is performed at 2050° F. (about 1120° Celsius or more). Of course, and depending on the materials used the sintering process is contemplated to be performed at temperatures greater or less than the aforementioned values and times.

The powders are mixed with approximately equal amounts of the same lubricant, and then compacted at a temperature of about 175° Celsius and with a pressing force of about 50 tons per square inch (50 tsi, approximately 770 MPa). Of course, and depending on the materials used the sintering process is contemplated to be performed at temperatures and pressing forces greater or less than the aforementioned values and times. Also, and as an alternative, the materials can be compacted used cold forming techniques wherein no extraneous heat is applied.

In an alternative embodiment, the inner ring would comprise a pure iron section or insert of wrought or pre-molded powdered metal material and the outer ring comprising the Si-Fe or Ni-Fe powder would be filled around the insert and pressed and then the two materials would be sintered together.

In yet another alternative embodiment, the inner ring comprises a powdered pure iron section and outer ring is a wrought or pre-molded powdered metal material and then the two materials are sintered together.

In yet another alternative embodiment, the inner ring and outer ring both wrought or premolded and then the two pre-made pieces are then sintered together.

In yet another alternative embodiment, the inner ring and outer ring are either sintered together along with the shaft or the inner ring is sintered to the shaft and then the outer ring is sintered to the inner ring. Of course, any one of the aforementioned combinations are contemplated for use each other alone or in combination thereof in accordance with the present disclosure.

Although the present disclosure describes particular methods for forming an armature having various magnetic characteristics and other qualities, the present disclosure and methods of making are not limited to the specific items or armature disclosed herein but are applicable to numerous other applications wherein an item is desired requiring an inner material and an outer material each having various characteristics suitable to a desired use.

While the invention has been described with reference to an exemplary embodiment, it will be understood by those skilled in the art that various changes may be made and equivalents may be substituted for elements thereof without departing from the scope of the invention. In addition, many modifications may be made to adapt a particular situation or material to the teachings of the invention without departing from the essential scope thereof. Therefore, it is intended that the present disclosure not be limited to the particular embodiment disclosed as the best mode contemplated for carrying out this invention, but that the invention will include all embodiments falling within the scope of the appended claims. Furthermore, no element, component, or method step in the present disclosure is intended to be dedicated to the public regardless of whether the element, component, or method step is explicitly recited in the claims.

## Claims

1. A magnetic armature (10), comprising:
an outer ring (12) formed of a first powdered metal, said outer ring having magnetic qualities and said first powdered metal of said outer ring comprising metals having poor welding characteristics;
an inner ring (14) formed of a second powdered metal and being disposed within said outer ring, said inner ring comprising a pure iron metal having good welding characteristics and said inner ring defining an inner opening configured for receiving a shaft for rotating the magnetic armature;
wherein said outer ring and said inner ring are joined together by a sintering process.

2. The magnetic armature of claim 1, wherein said first powdered metal is either Si-Fe or Ni-Fe.

3. The magnetic armature of claim 2, wherein said sintering process comprises heating said first powdered metal and said second powdered metal in excess of 2000 degrees Fahrenheit.

4. The magnetic armature of claim 3, wherein said sintering process further comprises:
defining a first cavity in a die, said first cavity corresponding to said outer ring;
filling said first cavity with said first powdered metal;
defining a second cavity in said die, said second cavity corresponding to said inner ring;
filling said second cavity with said second powdered metal; and
compacting said first and second powdered metals.

5. The magnetic armature of claim 4, wherein said die defines said inner opening of said inner ring.

6. The magnetic armature of claim 5, wherein said die defines features of the magnetic armature.

7. The magnetic armature of claim 5, wherein said shaft is welded to said inner ring.

8. A magnetic armature (10), comprising:
an outer ring (12) formed of a first powdered metal, said outer ring having magnetic qualities and said first powdered metal of said outer ring comprising metals having poor welding characteristics;
an inner ring (14) formed of a second metal and being disposed within said outer ring, said inner ring comprising a pure iron metal having good welding characteristics and said inner ring defining an inner opening configured for receiving a shaft (18) for rotating the magnetic armature;
wherein said outer ring and said inner ring are joined together by a sintering process.

9. The magnetic armature of claim 8, wherein said first powdered metal is either Si-Fe or Ni-Fe.

10. The magnetic armature of claim 9, wherein said sintering process comprises heating said first powdered metal and said second metal in excess of 2000 degrees Fahrenheit.

11. A magnetic armature (10), comprising:
an outer ring (12) formed of a first metal, said outer ring having magnetic qualities and said first metal of said outer ring comprising metals having poor welding characteristics;
an inner ring (14) formed of a powdered metal and being disposed within said outer ring, said inner ring comprising a pure iron metal having good welding characteristics and said inner ring defining an inner opening configured for receiving a shaft for rotating the magnetic armature;
wherein said outer ring and said inner ring are joined together by a sintering process.

12. The magnetic armature of claim 11, wherein said powdered metal is either Si-Fe or Ni-Fe.

13. The magnetic armature of claim 12, wherein said sintering process comprises heating said powdered metal and said metal in excess of 2000 degrees Fahrenheit.

14. The magnetic armature of claim 13, wherein said shaft is welded to said inner ring.

15. A method of manufacturing an item having magnetic qualities, comprising:
forming an outer ring (12) of a first powdered metal, said outer ring having magnetic qualities and said first powdered metal of said outer ring comprising metals having poor welding characteristics;
forming an inner ring (14) of a second powdered metal, said inner ring being configured to be disposed within said outer ring, said inner ring comprising a pure iron metal having good welding characteristics and said inner ring defining an inner opening (16) configured for receiving a shaft (18) for rotating the item;
wherein said outer ring and said inner ring are joined together by a sintering process.

16. The method of claim 15, wherein said first powdered metal is either Si-Fe or Ni-Fe.

17. The method of claim 16, wherein said sintering process comprises heating said first powdered metal and said second powdered metal in excess of 2000 degrees Fahrenheit.

18. The method of claim 17, wherein said sintering process further comprises:
defining a first cavity in a die, said first cavity corresponding to said outer ring;
filling said first cavity with said first powdered metal;
defining a second cavity in said die, said second cavity corresponding to said inner ring;
filling said second cavity with said second powdered metal; and
compacting said first and second powdered metals.

19. The method of claim 18, wherein said die defines said inner opening of said inner ring.

20. The method of claim 19, wherein said die defines features of the item.

21. The method of claim 20, wherein said shaft is welded to said inner ring.
